# EUROPÄISCHE PATENTANMELDUNG

(11) **EP 1 398 219 A2**
(43) Veröffentlichungstag der Anmeldung: **17.03.2004**
(21) Anmeldenummer: 03018659.7
(22) Anmeldetag: 21.08.2003
(51) Int. Cl.: B60R 11/02

(54) **Vorrichtung zur Unterbringung eines elektrischen Geräts im Innenraum eines Kraftfahrzeugs**

(30) Priorität: 11.09.2002 DE 10242467
(71) Anmelder: DaimlerChrysler AG, 70567 Stuttgart (DE)
(72) Erfinder: Diehl, Ralf, 76761 Rülzheim (DE); Mattedi, Markus, 72141 Walddorfhäslach (DE); Özkolacik, Mahir, 70771 Leinfelden-Echterdingen (DE); Thiesen, Dirk, 83135 Schechen (DE)

(57) **Zusammenfassung**

Eine Vorrichtung zur Unterbringung eines elektrischen Geräts im Innenraum eines Kraftfahrzeugs weist einen Rahmen auf, der an einer festen Struktur des Kraftfahrzeugs anbringbar ist. Innerhalb des Rahmens ist eine Schublade verschieblich angeordnet, welche Einrichtungen zur Befestigung des Geräts aufweist.

## Beschreibung

Die Erfindung betrifft eine Vorrichtung zur Unterbringung eines elektrischen Geräts im Innenraum eines Kraftfahrzeugs nach der im Oberbegriff von Anspruch 1 näher definierten Art. Des weiteren betrifft die Erfindung eine Dachablage in einem Nutzfahrzeug.

Eine gattungsgemäße Vorrichtung ist aus der DE 78 37 734 U1 bekannt. Mit derartigen Vorrichtungen werden insbesondere Autoradios in Kraftfahrzeuge eingebaut. Es können jedoch auch CB-Funkgeräte, Telefone oder andere in einem Kraftfahrzeug nützliche Geräte eingebaut werden.

Ein Einbausatz zum Einsetzen in Einbauöffnungen von Kraftfahrzeugen ist in der DE 37 11 432 C2 beschrieben. Ein solcher Einbausatz könnte beispielsweise bei der oben angegebenen gattungsgemäßen Vorrichtung verwendet werden.

Es ist bei beiden beschriebenen Lösungen jedoch problematisch, dass beim nachträglichen Einbauen dieser elektrischen Geräte, wie z.B. Autoradios, CB-Funkgeräte oder Telefone, der Einbauschacht äußerst schwer zugänglich ist und daher ein hoher Montageaufwand sowohl bezüglich der Befestigung als auch bezüglich des Anschließens dieser Geräte betrieben werden muss. Insbesondere bei LKWs, die eine verhältnismäßig lange Zeit eingesetzt werden, ist ein Austauschen der technischen Geräte, um jeweils eine moderne Ausstattung zu besitzen, recht beschwerlich.

Dachablagen für Nutzfahrzeuge sind in der DE 29 52 193 A1 oder der DE 37 21 377 A1 beschrieben.

Es ist Aufgabe der vorliegenden Erfindung, eine Vorrichtung zur Unterbringung eines elektrischen Geräts im Innenraum eines Kraftfahrzeugs zu schaffen, welches die Montage und Demontage des elektrischen Geräts erleichtert.

Erfindungsgemäß wird diese Aufgabe durch die in Anspruch 1 genannten Merkmale gelöst.

Die erfindungsgemäße Schublade kann vorteilhafterweise zur Montage des elektrischen Geräts aus dem Rahmen herausgezogen werden, so dass ein sehr einfaches Montieren des Geräts an einer festen Struktur des Kraftfahrzeugs möglich ist. Dadurch kann das elektrische Gerät beliebig oft und ohne große Mühe ausgewechselt werden.

Eine weitere Vereinfachung des Montagevorgangs, insbesondere hinsichtlich des Anschließens des Geräts, kann sich ergeben, wenn in einer vorteilhaften Weiterbildung der Erfindung wenigstens eines der Wandteile der Schublade Einrichtungen zur Anbringung von elektrischen Versorgungsleitungen für das Gerät aufweist.

In einer weiteren vorteilhaften Ausgestaltung der Erfindung kann vorgesehen sein, dass die Schublade mittels wenigstens einer Klemmeinrichtung in dem Rahmen verrastbar ist, wobei die Klemmeinrichtung ein in einer Öffnung einrastendes Federelement aufweist, welches mit einem Vorsprung versehen ist, der innerhalb eines Schlitzes angeordnet ist, in den ein Entriegelungselement einführbar ist, wobei das Einführen des Entriegelungselements in den Schlitz ein Zurückweichen des Vorsprungs bewirkt, der zu einem Entrasten des Federelements aus der Öffnung führt.

Dadurch ist ein werkzeugloses Entriegeln und Öffnen der Schublade möglich, um möglichst schnell an die Anschlüsse bzw. an die Befestigung des elektrischen Geräts zu gelangen.

Eine Dachablage in einem Nutzfahrzeug ist in Anspruch 11 angegeben.

Schubladen in Kraftfahrzeugen sind für sich beispielsweise aus der DE 198 35 364 C2 bekannt. Hierbei ist es jedoch nicht möglich, technische Geräte in einfacher Weise an denselben anzubringen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Dabei zeigen:
- Fig. 1: den Rahmen und die Schublade der erfindungsgemäßen Vorrichtung zusammen mit einer Blende in einer Explosionsdarstellung;
- Fig. 2: die erfindungsgemäße Vorrichtung in einem montierten Zustand;
- Fig. 3: eine Dachablage, in der die erfindungsgemäße Vorrichtung eingebaut ist; und
- Fig. 4: eine Klemmeinrichtung zur Verrastung der Schublade mit dem Rahmen in einer Schnittdarstellung.

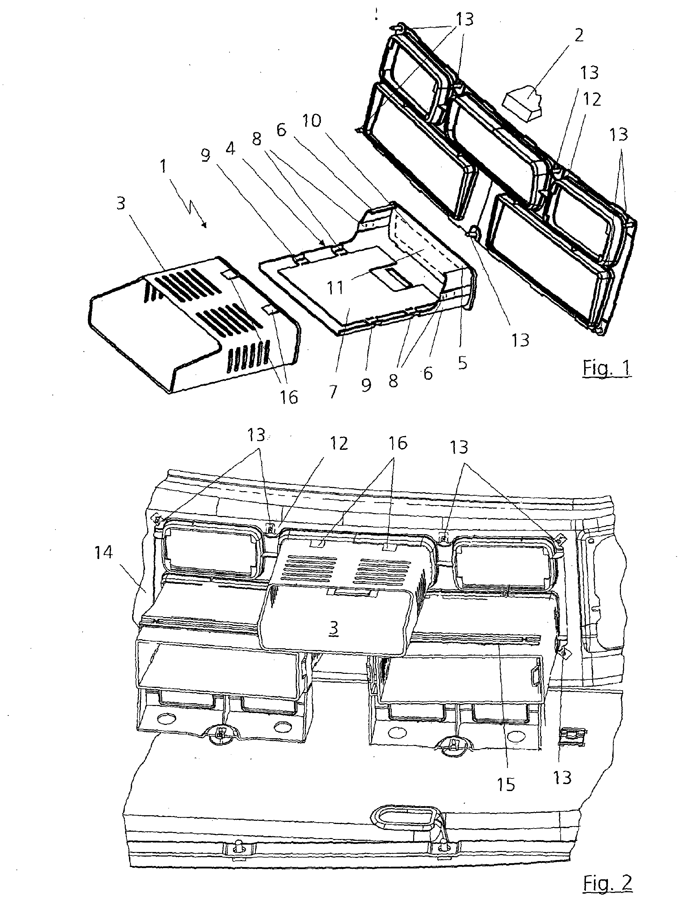

Fig. 1 zeigt eine Vorrichtung 1 zur Unterbringung eines nur angedeuteten elektrischen Geräts 2 im Innenraum eines in seiner Gesamtheit nicht dargestellten Kraftfahrzeugs, vorzugsweise eines LKW. Bei dem Gerät 2 handelt es sich vorzugsweise um ein CB-Funkgerät, es kann jedoch mit Hilfe der Vorrichtung 1 auch ein Autoradio, ein Telefon oder dergleichen eingebaut werden. Die Vorrichtung 1 weist einen Rahmen 3 und eine in den Rahmen 3 einführbare Schublade 4 auf.

Wie erkennbar, weist die Schublade 4 ein vorderes Wandteil 5, zwei seitliche Wandteile 6 sowie ein unteres Wandteil 7 auf. In diesem Zusammenhang wäre es gegebenenfalls möglich, auf die seitlichen Wandteile 6 zu verzichten oder statt des unteren Wandteils 7 ein oberes Wandteil vorzusehen. Die dargestellte Ausführung der Schublade 4 hat sich jedoch als am geeignetsten für den nachfolgend beschriebenen Zweck erwiesen.

Die Schublade 4 weist mehrere Einrichtungen 8 zum Anbringen des Geräts 2 auf. Bei den Einrichtungen 8 handelt es sich im vorliegenden Fall um mehrere Ausnehmungen, an denen das Gerät 2 mit Bändern oder dergleichen befestigt werden kann. Selbstverständlich wäre jedoch auch eine Befestigung mittels Schrauben oder anderer geeigneter Befestigungsmittel denkbar. Auch andersartige Einrichtungen 8, beispielsweise in Form von vorstehenden Zapfen oder dergleichen sind möglich. Im vorliegenden Fall sind die Einrichtungen 8 den seitlichen Wandteilen 6 und dem unteren Wandteil 7 zugeordnet, was jedoch rein beispielhaft ist. Zum Anbringen des Geräts 2 an der Schublade 4 wird diese aus dem Rahmen 3 herausgezogen, so dass eine einfache Zugänglichkeit zu den Einrichtungen 8 besteht und die Schublade 4 als leicht erreichbare Montageplattform für das elektrische Gerät 2 dient.

Das untere Wandteil 7 ist des weiteren mit Einrichtungen 9 zur Anbringung von elektrischen Versorgungsleitungen für das Gerät 2 vorsehen, die im vorliegenden Fall als Halteklammern ausgeführt sind. An diesen Einrichtungen 9 können beispielsweise Strom- und Antennenkabel angebracht werden, die dann beim Herausziehen der Schublade 4 aus dem Rahmen 3 sehr einfach zugänglich sind. Die genannten Kabel können bereits bei der Montage des Kraftfahrzeugs eingebaut werden.

Um zu verhindern, dass das vordere Wandteil 5 durch Schneiden oder ähnlichem mit einer Ausnehmung versehen werden muss, weist dasselbe eine mittels einer gestrichelten Linie angedeutete Sollbruchstelle 10 auf, die das Einbringen einer Öffnung 11 in das vordere Wandteil 5 ermöglicht. Da gerade auf dem Gebiet der CB-Funkgeräte sehr viele verschiedene Typen existieren, ist es auch möglich, mehrere Sollbruchstellen 10 zum Schaffen verschiedenartiger Öffnungen 11 vorzusehen. Alternativ hierzu kann die Öffnung 11 jedoch auch mit Hilfe eines Messers oder dergleichen in das vordere Wandteil 5 eingebracht werden. Im Gegensatz zu bekannten Lösungen bleibt dabei das vordere Wandteil 5 erhalten und kann dasselbe Material wie die restliche Innenausstattung aufweisen.

In Fig. 1 ist des weiteren eine Blende 12 dargestellt, welche mehrere Zapfen 13 aufweist, um auf diese Weise an einer in Fig. 2 dargestellten Innenverkleidung 14 des Kraftfahrzeugs, die eine feste Struktur desselben darstellt, angebracht zu werden. Auf diese Weise bildet auch die Blende 12 einen Teil der festen Struktur. An der Innenverkleidung 14 ist eine Führungsleiste 15 angebracht, an welcher der Rahmen über einen nicht dargestellten Vorsprung anbringbar ist. Hierzu ist die Führungsleiste 15 im vorliegenden Fall mit einer schwalbenschwanzförmigen Nut versehen. Des weiteren ist in Fig. 2 erkennbar, dass der Rahmen 3 zwei Rastnasen 16 aufweist, die die Blende 12 hintergreifen. Auf diese Weise wird der Rahmen 3 an der festen Struktur angebracht.

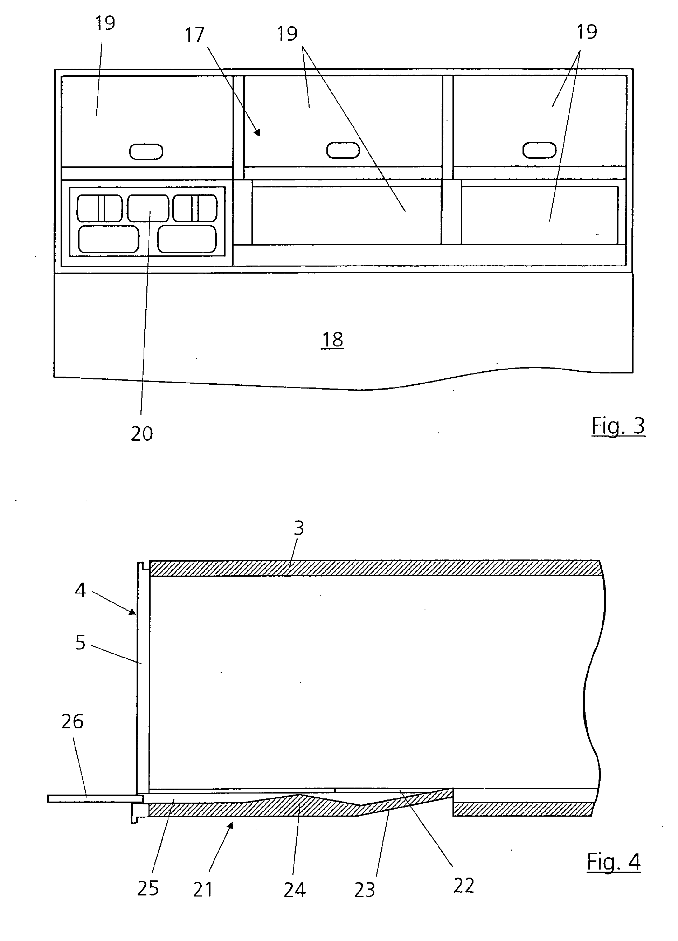

Fig. 3 zeigt eine Dachablage 17 des Kraftfahrzeugs, die ebenfalls Teil der festen Struktur desselben ist. Diese befindet sich im vorliegenden Fall oberhalb einer Windschutzscheibe 18 und weist mehrere Ablagefächer 19 auf, auf die nicht näher eingegangen werden soll. Die oben beschriebene Vorrichtung 1 mit dem Rahmen 3 und der Schublade 4 zur Aufnahme des Geräts 2 kann beispielsweise in einen Schacht 20 eingebaut werden. Selbstverständlich kann die Vorrichtung 1 statt des gezeigten Einsatzes in einem LKW auch in einem PKW verwendet werden.

In Fig. 4 ist eine Möglichkeit zur Verrastung der Schublade 4 mit dem Rahmen 3 mittels einer geschnittenen Ansicht dargestellt. Hierfür ist eine Klemmeinrichtung 21 vorgesehen, welche ein in eine Öffnung 22 der Schublade 4 eingreifendes Federelement 23 aufweist. Das Federelement 23 wiederum ist mit einem Vorsprung 24 versehen, der innerhalb eines Schlitzes 25 angeordnet ist, der sich zwischen dem Rahmen 3 und der Schublade 4 befindet. Im dargestellten Zustand ist die Schublade 4 mittels der Klemmeinrichtung 21 mit dem Rahmen 3 verrastet. Wird nun in den Schlitz 25 ein Entriegelungselement 26 eingeführt, so drückt dieses den Vorsprung 24 von der Schublade 4 weg nach unten und das Federelement 23 entfernt sich aus der Öffnung 22, so dass die Klemmeinrichtung 21 gelöst ist und die Schublade 4 aus dem Rahmen 3 herausgezogen werden kann. Das Entriegelungselement 26 kann beispielsweise eine Scheckkarte sein, so dass eine vollständig werkzeuglose Entriegelung der Schublade 4 möglich ist.

## Patentansprüche

1. Vorrichtung zur Unterbringung eines elektrischen Geräts im Innenraum eines Kraftfahrzeugs, mit einem Rahmen, der an einer festen Struktur des Kraftfahrzeugs anbringbar ist,
**dadurch gekennzeichnet,**
**dass** innerhalb des Rahmens (3) eine Schublade (4) verschieblich angeordnet ist, welche Einrichtungen (8) zur Befestigung des Geräts (2) aufweist.

2. Vorrichtung nach Anspruch 1,
**dadurch gekennzeichnet,**
**dass** die Schublade (4) ein vorderes Wandteil (5), wenigstens ein seitliches Wandteil (6) und ein unteres Wandteil (7) aufweist, wobei wenigstens eines der Wandteile (6,7) die Einrichtungen (8) zur Befestigung des Geräts (2) aufweist.

3. Vorrichtung nach Anspruch 2,
**dadurch gekennzeichnet,**
**dass** wenigstens eines der Wandteile (7) der Schublade (4) Einrichtungen (9) zur Anbringung von elektrischen Versorgungsleitungen für das Gerät (2) aufweist.

4. Vorrichtung nach Anspruch 2 oder 3,
**dadurch gekennzeichnet,**
**dass** das vordere Wandteil (5) wenigstens eine Sollbruchstelle (10) aufweist, die das Einbringen einer Öffnung (11) in das vordere Wandteil (5) ermöglicht.

5. Vorrichtung nach einem der Ansprüche 1 bis 4,
**dadurch gekennzeichnet,**
**dass** die Schublade (4) mittels wenigstens einer Klemmeinrichtung (21) in dem Rahmen (3) verrastbar ist.

6. Vorrichtung nach Anspruch 5,
**dadurch gekennzeichnet,**
**dass** die Klemmeinrichtung (21) ein in einer Öffnung (22) einrastendes Federelement (23) aufweist, welches mit einem Vorsprung (24) versehen ist, der innerhalb eines Schlitzes (25) angeordnet ist, in den ein Entriegelungselement (26) einführbar ist, wobei das Einführen des Entriegelungselements (26) in den Schlitz (25) ein Zurückweichen des Vorsprungs (24) bewirkt, der zu einem Entrasten des Federelements (23) aus der Öffnung (22) führt.

7. Vorrichtung nach Anspruch 6,
**dadurch gekennzeichnet,**
**dass** der Schlitz (25) derart ausgebildet ist, das in denselben eine Scheckkarte als Entriegelungselement (26) einführbar ist.

8. Vorrichtung nach Anspruch 6 oder 7,
**dadurch gekennzeichnet,**
**dass** die Öffnung (22) der Schublade (4) zugeordnet ist, und dass das Federelement (23) mit dem Vorsprung (24) dem Rahmen (3) zugeordnet ist, wobei sich der Schlitz (25) zwischen dem Rahmen (3) und der Schublade (4) befindet.

9. Vorrichtung nach einem der Ansprüche 1 bis 8,
**dadurch gekennzeichnet,**
**dass** der Rahmen (3) über wenigstens eine Führungsleiste (15) an der festen Struktur (12,14,17) anbringbar ist.

10. Vorrichtung nach einem der Ansprüche 1 bis 9,
**dadurch gekennzeichnet,**
**dass** der Rahmen (3) wenigstens eine Rastnase (16) aufweist, welche die feste Struktur (12,14,17) hintergreift.

11. Dachablage in einem Nutzfahrzeug mit einem Ablagefach (19) und mit einer dem Ablagefach (19) zugeordneten festen Struktur (12,14,17), wobei an der festen Struktur (12,14,17) eine Vorrichtung (1) nach einem der Ansprüche 1 bis 10 angebracht ist.
